# EUROPÄISCHE PATENTSCHRIFT

(11) **EP 2 449 612 B1**
(45) Veröffentlichungstag und Bekanntmachung des Hinweises auf die Patenterteilung: **06.08.2014**
(21) Anmeldenummer: 10726428.5
(22) Anmeldetag: 07.06.2010
(51) Int. Cl.: H01M 10/48, H01M 2/10, H01M 2/02, H01M 10/052

(54) **ELEKTROENERGIE-SPEICHERVORRICHTUNG AUS FLACHZELLEN UND RAHMENELEMENTEN MIT VERSORGUNGSKANAL**
ELECTRICAL ENERGY STORAGE DEVICE MADE OF FLAT CELLS AND FRAME ELEMENTS WITH A SUPPLY CHANNEL
DISPOSITIF DE STOCKAGE D'ÉNERGIE ÉLECTRIQUE SE COMPOSANT DE PILES PLATES ET D'ÉLÉMENTS D'ARMATURE COMPORTANT UN CANAL D'ALIMENTATION

(30) Priorität: 30.06.2009 DE 102009031127
(43) Veröffentlichungstag der Anmeldung: 09.05.2012
(73) Patentinhaber: Li-Tec Battery GmbH, 01917 Kamenz (DE)
(72) Erfinder: HOHENTHANNER, Claus-Rupert, 63457 Hanau (DE); SCHMIDT, Torsten, 06188 Landsberg (DE); MEINTSCHEL, Jens, 02994 Bernsdorf (DE); FUCHS, Andreas, 04229 Leipzig (DE)
(74) Vertreter: Wallinger, Michael
(86) Internationale Anmeldenummer: PCT/EP2010/003409
(87) Internationale Veröffentlichungsnummer: WO 2011/000458

(56) Entgegenhaltungen:
- DE-A1-102005 041 746
- DE-A1-102009 005 124
- JP-A- 2006 210 312

## Beschreibung

Die vorliegende Erfindung betrifft eine Elektroenergie-Speichervorrichtung aus Flachzellen und Rahmenelementen sowie ein Rahmenelement zur Verwendung in einer solchen Elektroenergie-Speichervorrichtung.

Es ist bekannt, Elektroenergie-Speicherzellen in Form flacher und rechteckig gebauter Speicherelemente aufzubauen. Solche Elektroenergie-Speicherzellen sind z.B. sogenannte Pouch- oder Coffeebag-Zellen, also flach und rechteckig gebaute Speicherzellen für Elektroenergie (Batteriezellen, Akkumulatorzellen, Kondensatoren, ...), insbesondere galvanische Zellen, deren elektrochemisch aktiver Teil von einer folienartigen Umhüllung umgeben ist, durch welche elektrische Anschlüsse (Pole) in Blechform, die sogenannten (Strom-)Ableiter geführt sind. Es ist ferner bekannt, eine Elektroenergie-Speichervorrichtung aus einer Mehrzahl solcher Elektroenergie-Speicherzellen aufzubauen, die mittels einer Spanneinrichtung zu einem Block zusammengefasst sind. Die elektrische Reihen- oder Parallelschaltung der Zellen erfolgt durch leitfähige Kontaktelemente, welche die elektrische Verbindung zwischen den entsprechenden Stromableitern benachbarter Zellen herstellen. Dabei ist es verbreitet, die Zellen, lose in einem Gestell aufgenommen oder über eine Klammer oder dergleichen zusammengepresst, in einem Stapel (auch "Zellblock" genannt) anzuordnen und die oben an einer Schmalseite der Zellen freiliegenden Pole mit geeigneten Mitteln zu verbinden. Neben den Verbindungsmitteln zur Verschaltung der Zellen werden von den Zellen zur Batterieelektronik auch Kabel zur Messung der Zellspannung für das Balancing (Ladungsausgleich) oder Temperaturmessung verlegt. Dadurch entstehen zusätzliche Kosten, Bauraum wird benötigt und das Gewicht erhöht sich.

Die deutsche Offenlegungsschrift DE 10 2009 005124 A1 offenbart eine Elektroenergie-Speichervorrichtung mit einer Mehrzahl von Speicherzellen flacher Form, wobei mehrere Speicherzellen in einer Stapelrichtung zu einem Zellblock gestapelt sind und durch eine Spannvorrichtung zwischen zwei Andruckplatten zusammengehalten werden. Die Speicherzellen sind innerhalb des Zellblocks parallel und/oder in Reihe miteinander verschaltet. Jede Speicherzelle wird in ihrem Randbereich zwischen zwei Rahmenelementen gehalten. Weiterhin weist jede Speicherzelle in ihrem Randbereich Stromableiter auf und erfolgt eine elektrische Kontaktierung zwischen den Stromableitern aufeinanderfolgender Speicherzellen mittels Kraftschluss über die Spannvorrichtung.

Die japanische Offenlegungsschrift JP 2006 210312 A1 offenbart eine Batteriepackung mit einer Mehrzahl von Speicherzellen flacher Form, wobei mehrere Speicherzellen in einer Stapelrichtung zu einem Zellblock gestapelt sind und durch eine Spannvorrichtung zwischen zwei Andruckplatten zusammengehalten werden. Die Speicherzellen sind innerhalb des Zellblockes parallel und/oder in Reihe miteinander verschaltet. Diese Batteriepackung weist plattenförmige Abstandshalter auf.

Es ist eine Aufgabe der vorliegenden Erfindung, den Aufbau einer Elektroenergie-Speichervorrichtung insbesondere (aber nicht nur) im Hinblick auf die vorstehend genannten Gesichtspunkte zu verbessern.

Die Aufgabe wird durch die Merkmale der unabhängigen Ansprüche gelöst. Vorteilhafte Weiterbildungen der Erfindung bilden den Gegenstand der Unteransprüche.

Eine Elektroenergie-Speichervorrichtung nach der Erfindung weist auf: eine Mehrzahl von flachen Speicherzellen zur Speicherung und Abgabe elektrischer Energie mit gegenüberliegenden, flachen Stromableitern, eine Mehrzahl von Rahmenelementen zum Halten der Speicherzellen, und ein Spannmittel zum Verspannen der Zellen mit den Rahmenelementen zu einem Stapel, wobei jede Speicherzelle wenigstens ein Mess- bzw. Fühlerelement zur Messung wenigstens einer physikalischen Größe, insbesondere der Temperatur und/oder der Spannung trägt, wobei an jedem Mess- bzw. Fühlerelement ein Kabel zur Übertragung der Messdaten angebracht ist, wobei die Rahmenelemente erste Ausnehmungen zur Aufnahme der Mess- bzw. Fühlerelemente und zweite Ausnehmungen, die mit den ersten Ausnehmungen in Verbindung stehen, aufweisen, wobei die zweiten Ausnehmungen der Rahmenelemente zusammengenommen wenigstens einen sich über die Länge der Vorrichtung erstreckenden Kanal zur Aufnahme der Kabel ausbilden.

Als eine Elektroenergie-Speichervorrichtung wird im Sinne der Erfindung eine Vorrichtung verstanden, welche auch zur Abgabe elektrischer Energie ausgelegt und eingerichtet ist, wobei die Energie in einer oder mehreren Speicherzellen speicherbar ist. Die Speicherzellen selbst sind naturgemäß ebenfalls auch zur Abgabe elektrischer Energie ausgelegt und eingerichtet. Eine Speicherzelle im Sinne der vorliegenden Erfindung ist jede Art von Einrichtung zur elektrischen Speicherung von Energie. Der Begriff umfasst damit insbesondere elektrochemische oder galvanische Zellen vom primären Typ (sogenannte Batterien, die ihre einmal gespeicherte chemische Energie über eine elektrochemische Energie einmal abgeben können und dann verbraucht sind) oder vom sekundären Typ (sogenannte Akkumulatoren, die durch Zuführen von elektrischen Ladungen, also von elektrischer Energie, durch eine elektrochemische Reaktion wiederaufladbar sind), aber auch andere Formen von Energiespeichern wie beispielsweise Kondensatoren. Speicherzellen im Sinne der Erfindung können insbesondere einen aktiven Teil aufweisen, innerhalb dessen Lade- und ggf. Umwandlungsvorgänge elektrischer Energie stattfinden und der von einer z.B. folienartigen Umhüllung vorzugsweise gas- und flüssigkeitsdicht umhüllt ist. Dabei ragen sogenannte Stromableiter aus dem Inneren des aktiven Teils, mit welchem sie in leitender Verbindung stehen, durch die Umhüllung nach außerhalb der Zelle und ermöglichen eine Verbindung der aktiven Teile der Zellen miteinander oder mit einem Verbraucher.

Als flach wird im Sinne der Erfindung eine geometrische Form verstanden, die in einer Raumrichtung eine geringere Ausdehnung als in zwei anderen Raumrichtungen aufweist. Als ein Rahmenelement im Sinne der Erfindung wird z.B. ein im Wesentlichen prismatisches, vorzugsweise in Extrusionsrichtung flaches Raumgebilde verstanden, das in einem radial inneren Bereich eine geringere Materialstärke als im radial äußeren Bereich aufweist, wobei davon insbesondere auch prismatische hohle Raumformen umfasst sind, d.h., Raumformen, die in einem radial inneren Bereich kein Material aufweisen. Die Materialstärke kann, muss aber nicht, im radial äußeren Bereich (dem Rahmen im eigentlichen Sinne) im Wesentlichen konstant sein.

Als ein Mess- bzw. Fühlerelement wird im Sinne der Erfindung eine Einrichtung beliebiger Art verstanden, die auch zur passiven oder aktiven Erfassung einer physikalischen Größe ausgelegt und eingerichtet ist; diese Einrichtung kann sich auf ein bloßes Leitungsende, das mit einer Messumgebung in Verbindung steht oder dieser ausgesetzt ist, beschränken oder mit einer Elektrik und/oder Elektronik zur Verarbeitung von Messdaten versehen sein. Das Mess- bzw. Fühlerelement kann auch ausgelegt und eingerichtet sein, Signale und/oder Ladungen in Richtung der Messumgebung, z.B. an einen Stromableiter, abzugeben; es kann also insbesondere auch die Funktion eines Ansteuerungselements erfüllen. Das Mess- bzw. Fühlerelement kann Mittel zur Befestigung an oder in der Messumgebung aufweisen.

Als ein Kabel wird im Sinne der Erfindung jede Einrichtung zur Leitung von Strömen und/oder Signalen verstanden; es kann sich dabei z.B. um elektrische oder optische oder andere Leiter handeln; auch Kombinationen mehrerer Leiter unterschiedlicher Art sind von dem Begriff umfasst.

Als eine Ausnehmung wird im Sinne der Erfindung jedwede Wegnahme von Material von einer geometrischen Grundform verstanden; es kann sich dabei z.B. um Einkerbungen, Einsenkungen, Taschen, Vertiefungen oder sonstige Kavitäten, Sack- oder Durchgangslöcher oder Nuten oder dergleichen handeln. Als ein Kanal wird im Sinne der Erfindung eine kontinuierliche, über die Länge der Vorrichtung als Ganzes sich erstreckende Ausnehmung verstanden, über welche ein Kabel geführt werden kann. Als Länge der Vorrichtung ist im Sinne der Erfindung im Wesentlichen die Länge zu verstehen, die durch die aufeinander gestapelten Rahmenelemente bestimmt ist; der Kanal kann sich jedoch weiter durch Bauelemente erstrecken, die beispielsweise stirnseitig auf den Stapel der Rahmenelemente aufgesetzt sind; ebenso kann der Kanal jeweils vor einem letzten Rahmenelement enden, soweit dort befindliche Mess- bzw. Fühlerelemente noch erreichbar sind.

Da an jeder Speicherzelle wenigstens ein Mess- bzw. Fühlerelement zur Messung einer physikalischen Größe, insbesondere der Temperatur, angebracht ist, ist es auch möglich, ein genaues charakteristisches Profil, insbesondere Temperaturprofil, der Speicherzellen zu erstellen, was z.B. eine genaue und zielgerichtete Regelung insbesondere des Temperaturhaushalts des Zellstapels, etwa durch individuelle lokale Kühlung, ermöglicht. Erstreckt sich die Messung z.B. auf die Spannung, ist auch eine geeignete Regelung des Ladungsausgleichs zwischen den Einzelzellen des Zellstapels möglich. Da die Rahmenelemente erste Ausnehmungen zur Aufnahme der Mess- bzw. Fühlerelemente aufweisen, ist auch eine raumsparende Unterbringung der Mess- bzw. Fühlerelemente möglich. Über den durch die zweiten Ausnehmungen gebildeten Kanal können die Datenkabel z.B. unter Ausnutzung eines Totraums unauffällig und geschützt geführt werden und bleiben auch aufgrund der Wegnahme von Material der Rahmenelemente gewichtsneutral. Da die Stromableiter der Speicherzellen einander gegenüberliegen, ist auch eine zuverlässige Verschaltung der Speicherzellen, in Reihen- und/oder Parallelschaltung, auf einfache Weise möglich. Da die Zellen mit den Rahmenelementen zu einem Stapel verspannt sind, kann auch eine Anzahl von flachen Speicherzellen platzsparend und montagefreundlich in einem stabilen Block angeordnet werden.

Die Vorrichtung ist so ausgebildet, dass die zweiten Ausnehmungen vom radial äußeren Rand der Rahmenelemente hin offen sind. Auf diese Weise kann der Kanal von außen leicht für Verkabelungs-, Wartungs- und Konfigurierungszwecke zugänglich sein.

Die eine Schließeirichtung, etwa ein Bügel, zum Verschließen des wenigstens einen Kanals vorgesehen ist, können die Datenkabel im Fall eines nach außen geöffneten Kanals unauffällig und geschützt geführt werden.

Zur Anbringung der Mess- bzw. Fühlerelemente bietet sich jeweils wenigstens ein Stromableiter der Speicherzellen an. Dort können z.B. elektrische Größen wie etwa die Zellenspannung direkt abgegriffen werden, und sonstige physikalische Größen wie etwa die Temperatur können über die Stromableiter gut aus dem Inneren der Zelle transportiert und abgegriffen werden. Dabei wird unter einem Anbringen im gegebenen Zusammenhang ein Platzieren verstanden, das zumindest im verspannten Zustand des Stapels eine Verschiebung in radialer oder axialer Richtung verhindert; die Anbringung kann dabei durch Klemmen, Kleben, Nieten, Löten oder dergleichen, also insbesondere lösbar oder unlösbar, vorgenommen sein.

Wenn die Stromableiter der Zellen jeweils zwischen Rahmenelementen mittels Kraftschluss durch das Spannmittel eingespannt sind, kann auch ein vorbestimmter Abstand zwischen benachbarten Zellen eingehalten werden, der so eingestellt sein kann, dass auf einen elektrochemisch aktiven Teil der Zellen keine Klemmkraft ausgeübt wird. Dies kann auch Vorteile hinsichtlich der Funktionssicherheit und Haltbarkeit der Zellen haben; des Weiteren können die flachen Seiten der Zellen Wärme an ein Wärmeträgermedium abstrahlen oder gegebenenfalls auch von diesem aufnehmen, etwa beim Start bei niedrigen Temperaturen. Durch geeignete Mittel wie eine individuelle Kühlmittelführung oder dergleichen kann die Temperatur in jedem Zwischenraum zwischen benachbarten Zellen individuell regelbar sein. Die Klemmung der Speicherzellen zwischen den Rahmenelementen an den Stromableitern ist dabei durch die gegenüberliegende Anordnung der Stromableiter erleichtert; dadurch wird auch eine zuverlässige orts- und lagefeste Fixierung der Speicherzellen in dem Block erleichtert.

Wenn jeweilige Druckendstücke, die auf den endseitigen Rahmenelementen über das Spannmittel mit dem Stapel verspannt sind, eine Durchlassöffnung in Höhe jedes Kanals aufweisen, können die Kabel besonders einfach aus dem Stapel heraus geführt werden. Als Druckendstück wird im Sinne der Erfindung ein Bauteil verstanden, das auch ausgelegt und eingerichtet ist, von dem Spannmittel ausgeübte Spannkräfte aufzunehmen und z.B. als Druckkräfte über die endseitigen Rahmenelemente in den Stapel zu leiten. Vorteilhaft ist es dabei, wenn die Druckendstücke die möglicherweise lokal auftretenden Spannkräfte des Spannmittels gleichmäßig verteilt als Druckkräfte in die Rahmenelemente einleiten.

Die Erfindung ist aufgrund des sensiblen Temperaturhaushalts besonders vorteilhaft auf Li-Ionen-Akkumulatoren anwendbar. Als ein Li-Ionen-Akkumulator wird im Sinne der Erfindung eine Elektroenergie-Speichervorrichtung verstanden, die galvanische Zellen, insbesondere Sekundärzellen, aufweisen, bei denen eine Quellenspannung durch Verschiebung von Lithium-Ionen zwischen einer positiven und einer negativen Elektrode erzeugt wird. Bei flachen Lithium-Ionen-Akkumulatorzellen können die positive Elektrode, die negative Elektrode und ein Elektrolyt z.B. schichtweise in einem Folienstapel vorliegen, wobei sich die Schichtfolge oder Teile davon ein- oder mehrmals wiederholen kann und wobei die Schichten (Folien) der positiven Elektroden mit einem ersten Stromableiter in Verbindung stehen und die Schichten (Folien) der negativen Elektroden mit einem zweiten Stromableiter in Verbindung stehen und die Elektrolytfolien als Sperrschichten dienen.

Die Erfindung betrifft auch ein Rahmenelement, das zur Verwendung in einer Elektroenergie-Speichervorrichtung, wie sie oben beschrieben wurde, gestaltet ist.

Die vorstehenden und weitere Merkmale, Aufgaben und Vorteile der vorliegenden Erfindung werden aus der nachstehenden Beschreibung deutlicher ersichtlich werden, die unter Bezugnahme auf die beigefügten Zeichnungen angefertigt wurde.

In den Zeichnungen ist:
- Fig. 1: eine perspektivische Darstellung eines Zellblocks als ein Ausführungsbeispiel der vorliegenden Erfindung;
- Fig. 2: eine perspektivische Darstellung eines Rahmenelements des Zellblocks aus Fig. 1;
- Fig. 3: eine Darstellung des Rahmenelements aus Fig. 2 zusammen mit einer Speicherzelle;
- Fig. 4: eine perspektivische Explosionsdarstellung der Zellanordnung der Fig. 1;
- Fig. 5: eine Darstellung der Zellanordnung mit Mess- bzw. Fühlerelementen und Zuleitungen des Zellblocks aus Fig. 1, ohne Rahmen und Spanneinrichtungen; und
- Fig. 6: eine stirnseitige Ansicht des Zellblocks aus Fig. 1, geschnitten in einer Ebene zwischen zwei benachbarten Speicherzellen.

Es ist darauf hinzuweisen, dass die Darstellungen in den Figuren schematisch sind und sich auf die Wiedergabe der für das Verständnis der Erfindung wichtigsten Merkmale beschränken. Auch ist darauf hinzuweisen, dass die in den Figuren wiedergegebenen Abmessungen und Größenverhältnisse allein der Deutlichkeit der Darstellung geschuldet sind und in keiner Weise einschränkend zu verstehen sind.

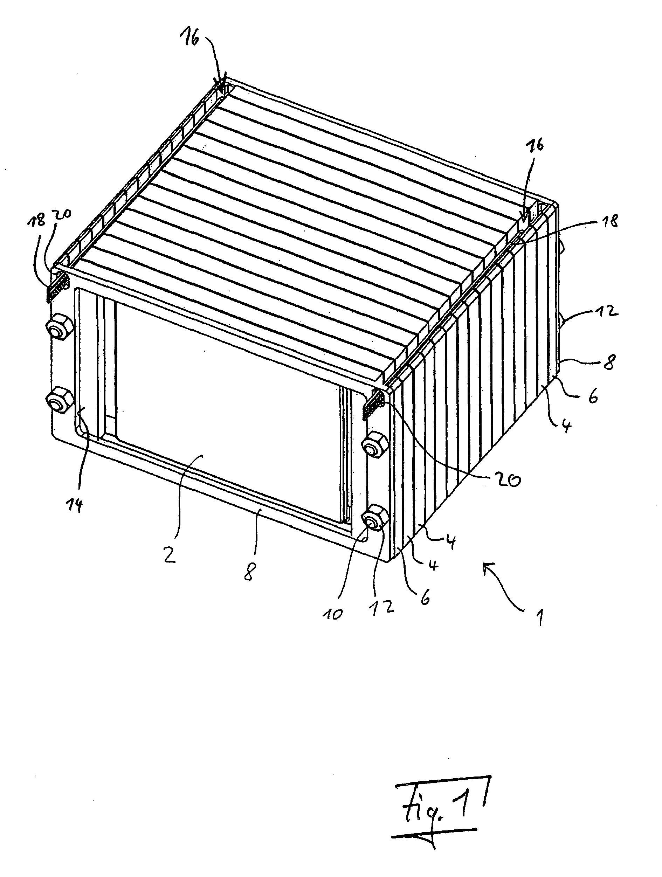

Ein Ausführungsbeispiel der vorliegenden Erfindung wird nun anhand der Figuren 1 bis 6 beschrieben.

Fig. 1 ist eine perspektivische Darstellung eines Zellblocks als ein Ausführungsbeispiel der vorliegenden Erfindung.

Gemäß der perspektivischen Gesamtdarstellung in Fig. 1 weist ein Zellblock 1 eine Mehrzahl von Speicherzellen 2 (galvanischen Zellen, Akkumulatorzellen oder dergleichen, in Fig. 1 nur eine sichtbar), eine Mehrzahl von Zwischenrahmen 4, zwei Endrahmen 6, zwei Druckbrillen 8 sowie vier Zuganker 10 mit beidseitig aufgesetzten Muttern 12 auf. Einer der beiden Endrahmen 4, die Zwischenrahmen 6 und der zweite der beiden Endrahmen 4 bilden in dieser Reihenfolge einen Block, der über die endseitig angeordneten Druckbrillen 8 mittels der Zuganker 10 und den Muttern 12 zusammengehalten wird. Die Druckbrillen 8 weisen ein Fenster 14 auf und sind somit rahmenförmig ausgebildet. Die Speicherzellen 2 befinden sich innerhalb der durch die gestapelten Rahmen 4, 6 gebildeten Struktur, wie weiter unten genauer beschrieben werden wird.

Zunächst ist auf zwei Versorgungskanäle 16 hinzuweisen, die jeweils auf der Oberseite des in dem aus den Zwischen- und Endrahmen 4, 6 gebildeten Blocks links und rechts ausgebildet sind. In den Versorgungskanälen 16 verlaufen Niederspannungskabel 18, die durch Öffnungen 20 in der vorderen Druckbrille 8 herausgeführt sind.

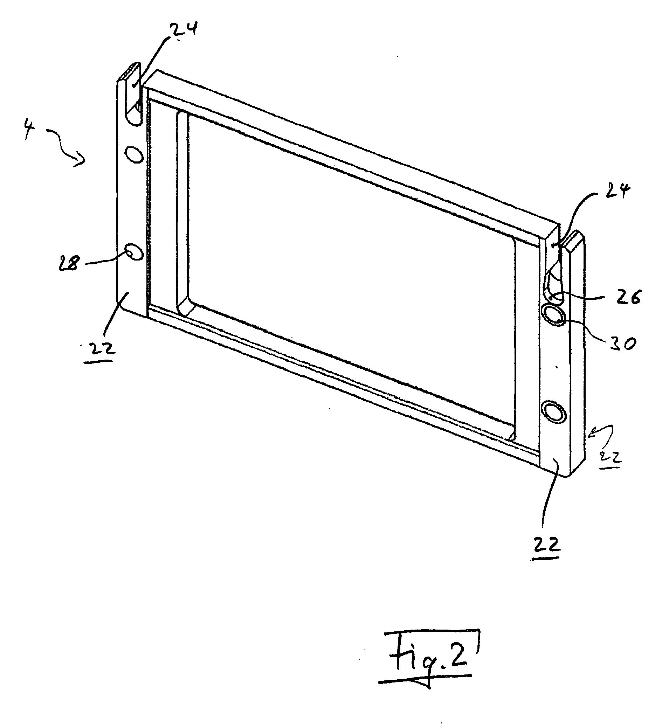

In Fig. 2 ist einer der Zwischenrahmen 4 des Blocks aus Fig. 1 einzeln dargestellt.

Der Zwischenrahmen 4 weist einen quaderförmigen Umriss auf mit zwei flachen Seiten und vier umlaufenden Schmalseiten. Die Flächennormale der flachen Seiten entspricht der Stapelrichtung der Rahmen in dem Zellblock von Fig. 1. In der Mitte ist eine fensterartige Öffnung ausgebildet, sodass die übrig gelassenen Stege einen Rahmen bilden. Auf den seitlichen, vertikalen Stegen des Zwischenrahmens sind vorne und hinten Druckflächen 22 ausgebildet.

Von der oberen Schmalseite aus erstreckt sich links und rechts jeweils eine Einkerbung 24 nach unten in den vertikalen Steg hinein. In der Verlängerung der Einkerbung 24 ist jeweils in einer der Druckflächen eine taschenförmige Vertiefung 26 ausgebildet. Es ist darauf hinzuweisen, dass in dem rechten vertikalen Steg die Vertiefung auf der Vorderseite ausgebildet ist, während in dem linken vertikalen Steg die Vertiefung auf der Rückseite ausgebildet ist.

In einem der vertikalen Stege sind zwei Durchgangsbohrungen 28 ausgebildet, welche die Druckflächen 22 in Stapelrichtung verbinden. In zwei weiteren, nicht näher bezeichneten Durchgangsbohrungen in dem anderen der vertikalen Stege; die einen größeren Durchmesser als die Durchgangsbohrungen 28 aufweisen, sind jeweils Hülsen 30 eingesetzt. Die Hülsen 30 sind aus einem guten elektrischen Leitermaterial hergestellt und dienen der Durchkontaktierung zwischen den Druckflächen 22 dieses Stegs.

Das für den Zwischenrahmen 4 Gesagte gilt entsprechend auch für die Endrahmen 6, wobei dort nur auf der den Zellen zugewandten Seite eine Vertiefung 26 ausgebildet ist.

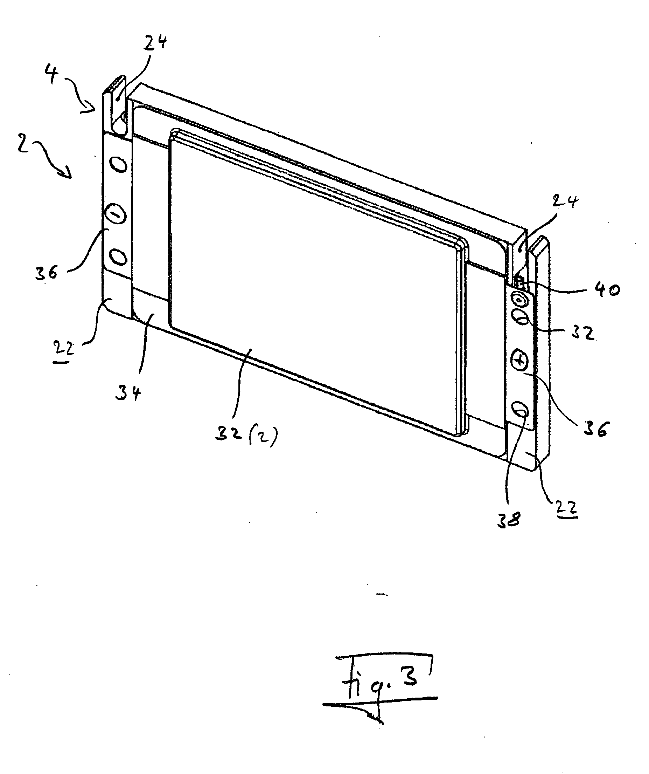

In Fig. 3 ist der Zwischenrahmen 4 aus Fig. 2 zusammen mit einer Speicherzelle 2 gezeigt.

Gemäß der Darstellung in Fig. 3 sind die Speicherzellen 2 als sog. Flachzellen oder Pouch-Zellen aufgebaut mit gegenüberliegenden, flachen Stromableitern. Genauer gesagt weist jede Speicherzelle 2 einen aktiven Teil 32, eine Siegelnaht (einen Randbereich) 34 und zwei Stromableiter 36 auf. In dem aktiven Teil 32 finden die elektrochemischen Reaktionen zur Speicherung und Abgabe elektrischer Energie statt. Grundsätzlich kann jede Art elektrochemischer Reaktion zum Aufbau von Speicherzellen verwendet werden; die Beschreibung bezieht sich aber insbesondere auf Li-Ionen-Akkumulatoren, auf welche die Erfindung aufgrund der Anforderungen an mechanische Stabilität und Wärmehaushalt und der wirtschaftlichen Bedeutung besonders gut anwendbar ist. Der aktive Teil 32 ist von zwei Folien (nicht näher dargestellt) sandwichartig eingefasst, wobei die überstehenden Ränder der Folien miteinander gas- und flüssigkeitsdicht verschweißt sind und die sogenannte Siegelnaht 34 bilden. Von zwei gegenüberliegenden Schmalseiten der Speicherzelle 2 ragen die Stromableiter 36 als ein positiver Pol (+) und ein negativer Pol (-) ab.

Die Stromableiter 36 weisen jeweils zwei Bohrungen 38 (nachstehend als "Polbohrungen" bezeichnet) auf, die mit den Durchgangsbohrungen 28 und den Hülsen 30 in dem Zwischenrahmen 4 fluchten. Der Durchmesser der Polbohrungen 38 ist gleich dem Durchmesser der Durchgangsbohrungen 28 und dem Innendurchmesser der Hülsen 30.

Auf der Rückseite des rechten Stromableiters 36 ist ein Fühlerelement 40 angebracht, das mit seinem Körper in der Vertiefung 26 des Zwischenrahmens 4 untergebracht ist. Das Fühlerelement 40 ist zur Ausgabe eines Ausgangssignals an seinem Anschlussende in Abhängigkeit von der Temperatur und der Spannung an dem Stromableiter 36 eingerichtet. Vorzugsweise ist das Fühlerelement 40 zur Aufnahme der Spannung und/oder eines Signals in Abhängigkeit von weiteren physikalischen Größen wie der Temperatur etc. eingerichtet. Des Weiteren ist das Fühlerelement eingerichtet, über sein Anschlussende einen Niederspannungsstrom zu empfangen und an den Ableiter 36 abzugeben oder umgekehrt. Über ein nicht näher dargestelltes Steuergerät kann daher eine elektrische Ladung der Zelle 2 zugeführt oder von ihr abgenommen werden und so ein Ladungsausgleich zwischen den Zellen 2 innerhalb des Zellblocks 1 herbeigeführt werden. Ferner kann in dem Steuergerät das Ausgangssignal des Fühlerelements 40 ausgewertet werden und beispielsweise ein lokal individualisierter Temperaturausgleich über geeignete Mittel der Wärmetechnik verwirklicht werden.

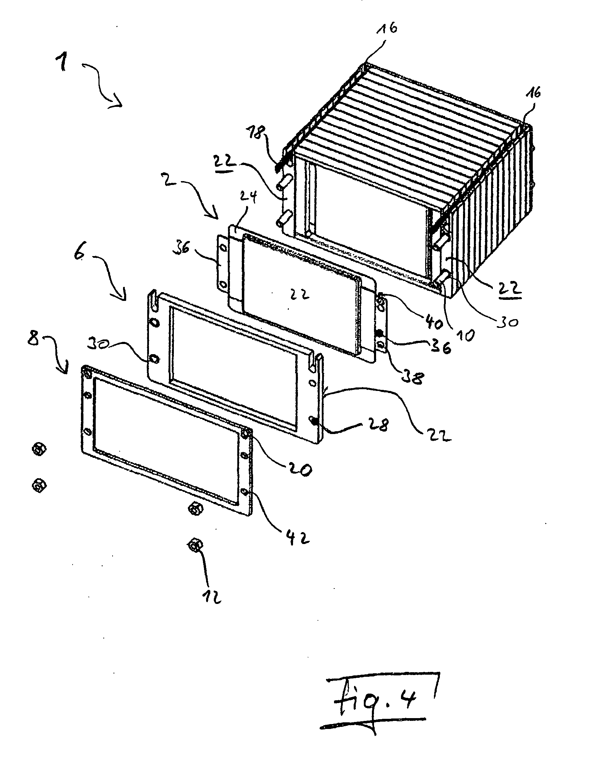

In Fig. 4 ist der Zellblock 1 aus Fig. 1 in einer perspektivischen Teilexplosionsdarstellung gezeigt. D.h., die Muttern 12 sind entfernt, und auf der dem Betrachter zugewandten Seite sind die Druckbrille 8, der Endrahmen 4, eine Speicherzelle 2 und ein Zwischenrahmen 6 von den Zugankern 10 abgezogen.

In der Figur wird deutlich, wie die Speicherzellen 2 zwischen den Druckflächen 22 der Rahmen 4, 6 sandwichartig aufgenommen und über die Zuganker 10 eingespannt wird. Die Zuganker 10 erstrecken sich durch die miteinander fluchtenden Durchgangsbohrungen 28, Hülsen 30, Polbohrungen 38 und in den Druckbrillen 8 ausgebildeten Augen 42 hindurch. Bei Festziehen der Muttern 12 auf den Zugankern 10 wird der ganze Zellblock 1 so verspannt, dass die Speicherzellen 2 fest zwischen den Rahmen 4, 6 bzw. 4, 4 gehalten werden.

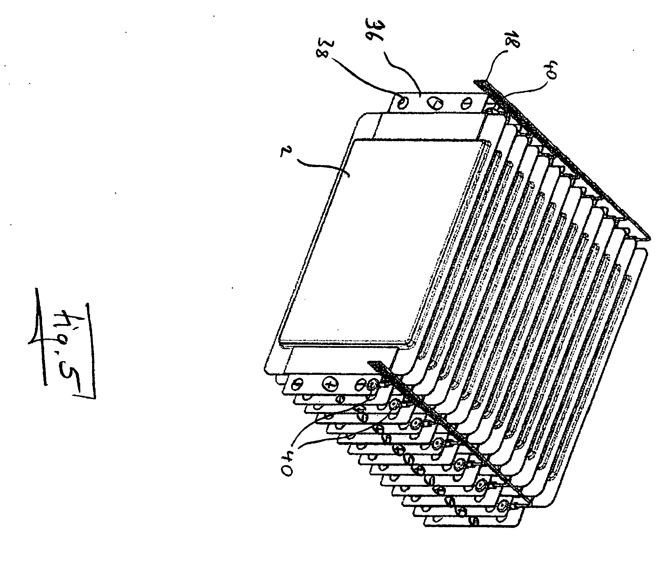

Die Rahmen 4, 6 sind so in dem Stapel angeordnet, dass die Hülsen 30 auf alternierenden lateralen Seiten des Stapels zu liegen kommen. Gemäß der Darstellung in Fig. 5, in welcher die Anordnung der Zellen in dem Zellstapel 1 mit Fühlerelementen 40 und Zuleitungen 18, aber ohne Rahmen 4, 6 und Spannelemente 10, 12 dargestellt ist, sind des Weiteren die Speicherzellen 2 in Stapelrichtung mit alternierender Pollage der Stromableiter 36 angeordnet. D.h., von benachbarten Speicherzellen 36 liegen immer Stromableiter 36 unterschiedlicher Polarität gegenüber. Die Hülsen 30 wiederum werden in dem Stapel mittels den Spannelementen 10, 12 gegen die gegenüberliegenden Stromableiter 36 gepresst und stellen so eine elektrisch leitende Verbindung zwischen diesen her. Auf diese Weise sind in dem Stapel fortgesetzt die Stromableiter 36 unterschiedlicher Polarität miteinander verbunden und ist eine Reihenschaltung der Speicherzellen 2 verwirklicht.

Über die Hülsen 30 in den Endrahmen 6 ist jeweils ein Stromableiter 36 der ersten und letzten Zelle 2 mit der ersten bzw. letzten Druckbrille 8 verbunden. Die Druckbrillen 8 sind aus einem leitfähigen Material hergestellt und stellen daher die Pole des Zellblocks 1 dar.

Der Zuganker 10 ist über geeignete Mittel wie etwa eine Beschichtung oder eine durchgehende Hülse aus einem isolierenden Material gegenüber den leitenden bzw. potentialbehafteten Teilen, also den Stromableitern 36, den Druckbrillen 8 und den Kontakthülsen 30 elektrisch isoliert, und ein Kurzschluss wird wirksam vermieden. Zusätzlich kann zwischen dem Zuganker 10 und den von ihm durchdrungenen Bauteilen ein Abstand vorgesehen sein. Obschon in der Figur nicht näher dargestellt, werden die Rahmen 4, 6, die Druckbrillen 8 und die Speicherzellen 2 so in radial definierter Lage gehalten; geeignete Mittel zur Zentrierung sind etwa Pass-Stifte oder eine geometrisch entsprechend abgestimmte Formgebung der gestapelten Bauteile. Ebenfalls in den Figuren nicht näher dargestellt, ist auch für eine geeignete Isolierung der Muttern 12 gegenüber den Druckbrillen 8 gesorgt; dies kann etwa durch isolierende Scheiben oder Kragenbuchsen, deren Zylinderabschnitte in die Augen 42 der jeweilige Druckbrille 8 ragen, geschehen.

Zurück zu Fig. 5, ist hier gezeigt, dass die Fühlerelemente 40, die jeweils auf dem positiven Stromableiter 36 (+) der Speicherzellen 2 angebracht sind, in Stapelrichtung auf alternierenden lateralen Seiten angeordnet sind. So erstrecken sich zwei Stränge von Zuleitungen bzw. Niederspannungskabeln 18, die jeweils mit dem Anschlussende der Fühlerelemente 40 verbunden sind, über die durch den Verbund der Einkerbungen 24 der Rahmen 4, 6 gebildeten Versorgungskanäle 16 (vgl. Fign. 1, 4) und durch die Öffnungen 20 der vorderen Druckbrille 8 hindurch nach außen zu dem nicht näher dargestellten Steuergerät.

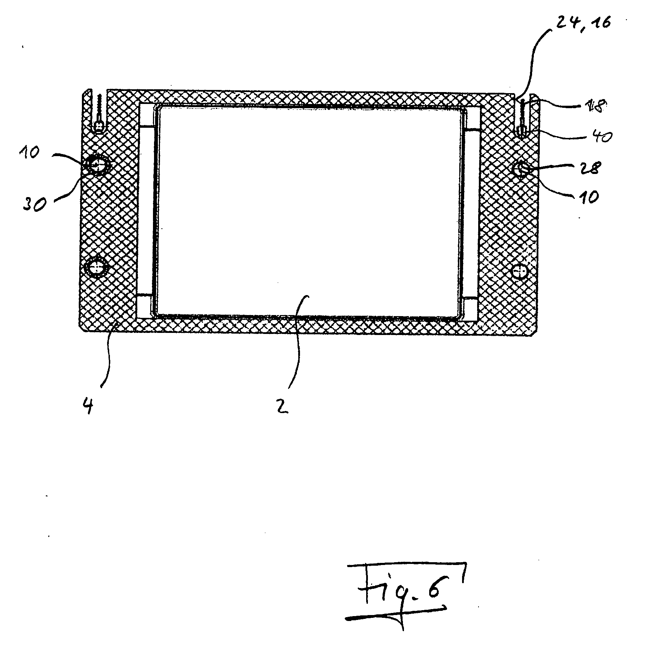

Schließlich ist Fig. 6 eine stirnseitige Ansicht des Zellblocks aus Fig. 1, geschnitten in einer Ebene zwischen zwei benachbarten Speicherzellen. Es ist hier die Lage der Fühlerelemente 40 (nur das obere Anschlussende ist sichtbar) und der Zuleitungen 18 in den durch die Einkerbungen 24 gebildeten Versorgungskanälen 16 von der Stirnseite des Zellstapels aus gezeigt.

Somit ist vorstehend wenigstens Ausführungsbeispiel einer Elektroenergie-Speichervorrichtung beschrieben, die erfindungsgemäß aufweist: eine Mehrzahl von flachen Speicherzellen zur Speicherung und Abgabe elektrischer Energie mit gegenüberliegenden, flachen Stromableitern, eine Mehrzahl von Rahmenelementen zum Halten der Speicherzellen, und ein Spannmittel zum Verspannen der Zellen mit den Rahmenelementen zu einem Stapel, wobei jede Speicherzelle wenigstens ein Mess- bzw. Fühlerelement zur Messung wenigstens einer physikalischen Größe, insbesondere der Temperatur und/oder der Spannung trägt, wobei an jedem Mess- bzw. Fühlerelement ein Kabel zur Übertragung der Messdaten angebracht ist, wobei die Rahmenelemente erste Ausnehmungen zur Aufnahme der Mess- bzw. Fühlerelemente und zweite Ausnehmungen, die mit den ersten Ausnehmungen in Verbindung stehen, aufweisen, wobei die zweiten Ausnehmungen der Rahmenelemente zusammengenommen wenigstens einen sich über die Länge der Vorrichtung erstreckenden Kanal zur Aufnahme der Kabel ausbilden.

Der Zellblock 1 ist eine Elektroenergie-Speichervorrichtung im Sinne der Erfindung. Die Endrahmen 4 und Zwischenrahmen 6 sind Beispiele für Rahmenelemente im Sinne der Erfindung. Die Zuganker 10 und Muttern 12 sind Beispiele für ein Spannmittel im Sinne der Erfindung. Die Druckbrillen 8 sind Beispiele für Druckendstücke im Sinne der Erfindung. Das Fühlerelement 40 ist ein Beispiel für ein Mess- bzw. Fühlerelement im Sinne der Erfindung. Die Vertiefung 26 ist ein Beispiel für eine erste Ausnehmung im Sinne der Erfindung, und die Einkerbung 24 ist ein Beispiel für eine zweite Ausnehmung im Sinne der Erfindung. Ein Versorgungskanal 16 ist ein Beispiel für einen Kanal im Sinne der Erfindung. Die Öffnung 20 ist ein Beispiel für eine Durchlassöffnung im Sinne der Erfindung Die Niederspannungskabel 18 sind Beispiele für ein Kabel im Sinne der Erfindung.

Obschon die vorliegende Erfindung vorstehend unter Bezugnahme auf konkrete Ausführungsbeispiele in ihren wesentlichen Merkmalen beschrieben wurde, versteht sich, dass die Erfindung nicht auf diese Ausführungsbeispiele beschränkt ist, sondern in dem durch die Patentansprüche vorgegebenen Umfang und Bereich abgewandelt und erweitert werden kann.

Die in den Figuren gezeigte Reihenschaltung der Speicherzellen 2 ist in der Praxis besonders bedeutsam. Es sind aber auch durch entsprechende Anordnung der Zellen 2 und der Kontakthülsen 30 in den Zwischenrahmen 4 auch eine Parallelschaltung oder Kombinationen von Parallel- und Reihenschaltungen realisierbar.

Es kann eine Zentriereinrichtung zur radialen Zentrierung der Zellen 2 innerhalb eines Zellblocks bzw. relativ zu den Abstandselementen vorgesehen sein. Eine solche Zentriereinrichtung kann etwa aus Pass-Stiften und Passbohrungen in den Abstandselementen und Ableitern oder andere Maßnahmen verwirklicht sein.

In einer Abwandlung sind zur Verfeinerung der Messung und Steuerung Mess- bzw. Fühlerelemente 40 an jedem Stromableiter 38 angebracht. Die Anbringung der Mess- bzw. Fühlerelemente 40 an den Stromableitern 38 sind eine beispielhafte Möglichkeit. Sie können aber an beliebiger Stelle auf der Zelle angebracht sein, soweit dies konstruktive oder funktionelle Vorteile bietet.

In einer weiteren Abwandlung sind die Mess- bzw. Fühlerelemente jeweils als Niet ausgebildet, mit welchem das Messkabel über Kabelendschuhe befestigt ist.

In einer weiteren Abwandlung werden auf jeder Seite mehr als zwei Zuganker verwendet.

In einer letzten Abwandlung wird anstelle von Zugankern ein Spannband zum Verspannen des Zellblocks verwendet.

### Liste der Bezugszeichen:

- 1: Zellblock
- 2: Speicherzelle
- 4: Zwischenrahmen
- 6: Endrahmen
- 8: Druckbrille
- 10: Zuganker
- 12: Mutter
- 14: Fenster in 8
- 16: Versorgungskanal
- 18: Niederspannungskabel
- 20: Öffnung in 8
- 22: Druckfläche
- 24: Einkerbung
- 26: Vertiefung
- 28: Durchgangsbohrung in 22
- 30: Kontakthülse
- 32: Aktiver Teil von 2
- 34: Siegelnaht von 2
- 36: Stromableiter von 2 ((+) und (-))
- 38: Polbohrung in 14
- 40: Fühler- bzw. Messelement
- 42: Auge in 8

Es wird ausdrücklich darauf hingewiesen, dass vorstehende Bezugszeichenliste integraler Bestandteil der Beschreibung ist.

## Patentansprüche

1. Elektroenergie-Speichervorrichtung (1), aufweisend: eine Mehrzahl von flachen Speicherzellen (2) zur Speicherung und Abgabe elektrischer Energie mit gegenüberliegenden, flachen Stromableitern (36), eine Mehrzahl von Rahmenelementen (4, 6) zum Halten der Speicherzellen (2), und ein Spannmittel (10, 12) zum Verspannen der Speicherzellen (2) mit den Rahmenelementen (4, 6) zu einem Stapel, wobei jede Speicherzelle (2) wenigstens ein Mess- bzw. Fühlerelement (40) zur Messung wenigstens einer physikalischen Größe, insbesondere der Temperatur und/oder der Spannung, trägt, wobei an jedem Mess- bzw. Fühlerelement (40) ein Kabel (18) zur Übertragung der Messdaten angebracht ist, wobei die Rahmenelemente (4, 6) erste Ausnehmungen (26) zur Aufnahme der Mess- bzw. Fühlerelemente (40) und zweite Ausnehmungen (24), die mit den ersten Ausnehmungen (26) in Verbindung stehen, aufweisen, wobei die zweiten Ausnehmungen (24) der Rahmenelemente (4, 6) zusammengenommen wenigstens einen sich über die Länge der Elektroenergie-Speichervorrichtung (1) erstreckenden Kanal zur Aufnahme der Kabel (18) ausbilden, wobei die zweiten Ausnehmungen (24) zum radial äußeren Rand der Rahmenelemente (4, 6) hin offen sind und wobei die Elektroenergie-Speichervorrichtung (1) eine Schließeinrichtung zum Verschließen des wenigstens einen Kanals aufweist.

2. Elektroenergie-Speichervorrichtung (1) nach Anspruch 1, **dadurch gekennzeichnet, dass** die Schließeinrichtung einen Bügel aufweist.

3. Elektroenergie-Speichervorrichtung (1) nach einem der vorstehenden Ansprüche, **dadurch gekennzeichnet, dass** die Speicherzellen (2) mit alternierender Pollage in dem Stapel angeordnet sind.

4. Elektroenergie-Speichervorrichtung (1) nach Anspruch 3, **dadurch gekennzeichnet, dass** die Mess- bzw. Fühlerelemente (40) jeweils an wenigstens einem der Stromableiter (36) der Speicherzellen (2), vorzugsweise ausschließlich an Stromableitern (2) gleicher Polarität angebracht sind.

5. Elektroenergie-Speichervorrichtung (1) nach einem der vorstehenden Ansprüche, **dadurch gekennzeichnet, dass** die Speicherzellen (2) jeweils an ihren Stromableitern (36) zwischen zwei Rahmenelementen (4, 6) mittels Kraftschluss durch das Spannmittel (10, 12) eingespannt sind.

6. Elektroenergie-Speichervorrichtung (1) nach Anspruch 5, **dadurch gekennzeichnet, dass** das Spannmittel (10, 12) eine Mehrzahl, vorzugsweise vier oder sechs, von Zugankern (10) aufweist, die sich durch Bohrungen (38) in den Stromableitern (36) und den Rahmenelementen (4, 6) hindurch erstrecken.

7. Elektroenergie-Speichervorrichtung (1) nach Anspruch 6, **dadurch gekennzeichnet, dass** die Zuganker (10) mit einem elektrisch isolierenden Material ummantelt oder mit einer durchgehenden Isolierhülse umgeben sind.

8. Elektroenergie-Speichervorrichtung (1) nach einem der Ansprüche 5 bis 7, **dadurch gekennzeichnet, dass** die Rahmenelemente (4, 6) aus einem elektrisch isolierenden Material wie etwa einem Glas- oder Keramikmaterial oder einem Kunststoff hergestellt sind und Kontaktierungselemente (30) aus einem elektrisch leitenden Material aufweisen, die eine elektrische Durchkontaktierung zwischen gegenüberliegenden Druckflächen (22) herstellen.

9. Elektroenergie-Speichervorrichtung (1) nach Anspruch 8, **dadurch gekennzeichnet, dass** die Kontaktierungselemente Hülsen (30) sind, durch welche hindurch sich die Zuganker (10) erstrecken.

10. Elektroenergie-Speichervorrichtung (1) nach einem der vorstehenden Ansprüche, **dadurch gekennzeichnet, dass** der Stapel durch zwei leitfähige, vorzugsweise rahmenförmige Druckendstücke (8) begrenzt wird, welche auf den endseitigen Rahmenelementen (6) über das Spannmittel (10, 12) mit dem Stapel verspannt sind.

11. Elektroenergie-Speichervorrichtung (1) nach Anspruch 10, **dadurch gekennzeichnet, dass** die Druckendstücke (8) jeweils mit einem Stromableiter (36) der ersten bzw. letzten Speicherzelle (2) elektrisch verbunden sind.

12. Elektroenergie-Speichervorrichtung (1) nach Anspruch 10 oder 11, **dadurch gekennzeichnet, dass** die Druckendstücke (8) eine Durchlassöffnung (20) in Höhe jedes Kanals aufweist.

13. Elektroenergie-Speichervorrichtung (1) nach einem der vorstehenden Ansprüche, **dadurch gekennzeichnet, dass** die Speicherzellen (2) Akkumulatoren sind, in denen eine elektrochemische Reaktion, insbesondere unter Beteiligung von Li-Ionen, stattfindet.

14. Rahmenelement (4, 6), das zur Verwendung in einer Elektroenergie-Speichervorrichtung (1) nach einem der vorstehenden Ansprüche gestaltet ist.

## Claims

1. An electrical energy storage apparatus (1) comprising: a plurality of flat storage cells (2) for storing and discharging electrical energy having oppositely situated flat current conductors (36), a plurality of frame elements (4, 6) for holding the storage cells (2), and a clamping means (10, 12) for clamping the storage cells (2) to the frame elements (4, 6) to form a stack, wherein each storage cell (2) incorporates at least one measuring or sensing element (40) to measure at least one physical variable, particularly the temperature and/or the voltage, wherein a cable (18) for transmitting measurement data is fixed to each measuring or sensing element (40), wherein the frame elements (4, 6) comprise first cutouts (26) for receiving the measuring and/or sensing elements (40) and second cutouts (24) which are connected to the first cutouts (26), wherein the second cutouts (24) of the frame elements (4, 6) together form at least one channel extending the length of the electrical energy storage apparatus (1) for receiving the cable (18), wherein the second cutouts (24) are open toward the radial outer edge of the frame elements (4, 6), and wherein the electrical energy storage apparatus (1) comprises a closure device for closing the at least one channel.

2. The electrical energy storage apparatus (1) according to claim 1, **characterized in that** the closure device comprises a clamp.

3. The electrical energy storage apparatus (1) according to one of the preceding claims, **characterized in that** the storage cells (2) are arranged into the stack with alternating pole positions.

4. The electrical energy storage apparatus (1) according to claim 3, **characterized in that** the measuring and/or sensing elements (40) are each fixed to at least one of the current conductors (36) of the storage cells (2), preferably only to current conductors (36) of the same polarity.

5. The electrical energy storage apparatus (1) according to any one of the preceding claims, **characterized in that** the storage cells (2) are each clamped at their current conductors (36) between two frame elements (4, 6) by the clamping means (10, 12) in a frictional connection.

6. The electrical energy storage apparatus (1) according to claim 5, **characterized in that** the clamping means (10, 12) comprises a plurality, preferably four or six, tension rods (10) which extend through bore holes (38) in the current conductors (36) and the frame elements (4, 6).

7. The electrical energy storage apparatus (1) according to claim 6, **characterized in that** the tension rods (10) are encased in an electrically insulating material or are enclosed by a continuous insulating sleeve.

8. The electrical energy storage apparatus (1) according to one of claims 5 to 7, **characterized in that** the frame elements (4, 6) are made of an electrically insulating material such as, for example, a glass or ceramic material or a plastic and comprise contacting elements (30) made of an electrically conductive material which produce a through-connection between opposingly disposed pressure surfaces (22).

9. The electrical energy storage apparatus (1) according to claim 8, **characterized in that** the contacting elements (30) are sleeves through which the tension rods (10) extend.

10. The electrical energy storage apparatus (1) according to any one of the preceding claims, **characterized in that** the stack is delimited by two conductive, preferably frame-shaped, pressure end pieces (8) which are clamped to the stack on the end-side frame elements (6) via the clamping means (10, 12).

11. The electrical energy storage apparatus (1) according to claim 10, **characterized in that** the pressure end pieces (8) are each electrically connected to a current conductor (36) of the first or the last storage cell (2), respectively.

12. The electrical energy storage apparatus (1) according to claim 10 or 11, **characterized in that** the pressure end pieces (8) comprise a through opening (20) at the height of each channel.

13. The electrical energy storage apparatus (1) according to any one of the preceding claims, **characterized in that** the storage cells (2) are accumulators in which an electrochemical reaction occurs, particularly involving Li ions.

14. A frame element (4, 6) designed for use in an electrical energy storage apparatus (1) according to any one of the preceding claims.

## Revendications

1. Dispositif d'accumulation d'énergie électrique (1), comportant : une pluralité de cellules d'accumulation (2) plates, destinées à emmagasiner et distribuer l'énergie électrique avec des limiteurs de surtension (36) plats, situés face à face, une pluralité d'éléments de cadre (4, 6) pour maintenir les cellules d'accumulation (2), et un moyen de fixation sous tension (10, 12) pour bloquer les cellules d'accumulation (2) avec les éléments de cadre (4, 6) en formant un empilement, chaque cellule d'accumulation (2) portant au moins un élément de mesure ou de détection (40) pour mesurer au moins une grandeur physique, en particulier la température et/ou la tension, un câble (18) pour la transmission des données de mesure étant monté sur chaque élément de mesure ou de détection (40), les éléments de cadre (4, 6) comportant des premiers évidements (26) destinés à recevoir les éléments de mesure ou de détection (40) et des deuxièmes évidements (24) qui sont reliés aux premiers évidements (26), lesdits deuxièmes évidements (24) des éléments de cadre (4, 6) formant conjointement au moins un canal qui s'étend sur toute la longueur du dispositif d'accumulation d'énergie électrique (1) et qui est destiné à recevoir le câble (18), lesdits deuxièmes évidements (24) étant ouverts vers le bord radialement extérieur des éléments de cadre (4, 6) et ledit dispositif d'accumulation d'énergie électrique (1) comportant un dispositif de fermeture permettant de fermer au moins un canal.

2. Dispositif d'accumulation d'énergie électrique (1) selon la revendication 1, **caractérisé en ce que** le dispositif de fermeture comporte un étrier.

3. Dispositif d'accumulation d'énergie électrique (1) selon l'une quelconque des revendications précédentes, **caractérisé en ce que** les cellules d'accumulation (2) sont agencées dans l'empilement avec un positionnement alterné des pôles.

4. Dispositif d'accumulation d'énergie électrique (1) selon la revendication 3, **caractérisé en ce que** les éléments de mesure ou de détection (40) sont montés respectivement sur au moins un des limiteurs de surtension (36) des cellules d'accumulation (2), de préférence exclusivement sur des limiteurs de surtension (36) de même polarité.

5. Dispositif d'accumulation d'énergie électrique (1) selon l'une quelconque des revendications précédentes, **caractérisé en ce que** les cellules d'accumulation (2) sont bloqués respectivement sur leurs limiteurs de surtension (36) entre deux éléments de cadre (4, 6) sous l'effet d'un assemblage par force induit par le moyen de fixation sous tension (10, 12).

6. Dispositif d'accumulation d'énergie électrique (1) selon la revendication 5, **caractérisé en ce que** le moyen de fixation sous tension (10, 12) comporte une pluralité de tirants d'ancrage (10), de préférence quatre ou six, qui passent à travers des forures (38) dans les limiteurs de surtension (36) et les éléments de cadre (4, 6).

7. Dispositif d'accumulation d'énergie électrique (1) selon la revendication 6, **caractérisé en ce que** les tirants d'ancrage (10) sont gainés par un matériau électro-isolant ou sont entourés par une gaine isolante continue.

8. Dispositif d'accumulation d'énergie électrique (1) selon l'une quelconque des revendications 5 à 7, **caractérisé en ce que** les éléments de cadre (4, 6) sont réalisés dans un matériau électro-isolant, tel qu'un matériau en verre ou céramique ou une matière plastique, et comportent des éléments de mise en contact (30) réalisés dans un matériau électroconducteur, qui établissent une mise en contact électrique entre des surfaces de pression (22) situées face à face.

9. Dispositif d'accumulation d'énergie électrique (1) selon la revendication 8, **caractérisé en ce que** les éléments de mise en contact sont des douilles (30) à travers lesquelles passent les tirants d'ancrage (10).

10. Dispositif d'accumulation d'énergie électrique (1) selon l'une quelconque des revendications précédentes, **caractérisé en ce que** l'empilement est délimité par deux éléments d'embout de pression (8) conducteurs, de préférence en forme de cadre, lesquels sont bloqués avec l'empilement sur les éléments de cadre (6) des extrémités par l'intermédiaire du moyen de fixation sous tension (10, 12).

11. Dispositif d'accumulation d'énergie électrique (1) selon la revendication 10, **caractérisé en ce que** les éléments d'embout de pression (8) sont reliés électriquement chacun à un limiteur de surtension (36) de la première ou de la dernière cellule d'accumulation (2).

12. Dispositif d'accumulation d'énergie électrique (1) selon la revendication 10 ou 11, **caractérisé en ce que** les éléments d'embout de pression (8) comportent une ouverture de passage (20) à hauteur de chaque canal.

13. Dispositif d'accumulation d'énergie électrique (1) selon l'une quelconque des revendications précédentes, **caractérisé en ce que** les cellules d'accumulation (2) sont des accumulateurs, dans lesquels se produit une réaction électrochimique, en particulier moyennant la participation d'ions lithium.

14. Élément de cadre (4, 6) qui est configuré pour être utilisé dans un dispositif d'accumulation d'énergie électrique (1) selon l'une quelconque des revendications précédentes.
